# EUROPEAN PATENT APPLICATION

(11) **EP 1 321 314 A2**
(43) Date of publication of application: **25.06.2003**
(21) Application number: 02013578.6
(22) Date of filing: 20.06.2002
(51) Int. Cl.: B60C 23/04

(54) **Transmitter of tire condition monitoring apparatus**

(30) Priority: 19.12.2001 JP 2001386677
(71) Applicant: Pacific Industrial Co., Ltd., Ogaki-shi, Gifu-ken 503-8603 (JP)
(72) Inventor: Saheki, Setsuhiro, Ogaki-shi, Gifu-ken, 503-8603 (JP)
(74) Representative: Maiwald Patentanwalts GmbH

(57) **Abstract**

A transmitter of a tire condition monitoring apparatus transmits data indicating the condition of a tire (T) of a vehicle. The transmitter is located in the tire (T). The transmitter includes a casing (10), which accommodates an electronic unit for measuring a parameter representing the condition of the tire (T), and a valve stem (20). The valve stem (20) is formed independently from the casing (10). The valve stem (20) is attached to a wheel (W) to which the tire (T) is attached. An elastic connecting member (30) connects the casing (10) to the valve stem (20).

## Description

### BACKGROUND OF THE INVENTION

The present invention relates to transmitters of tire condition monitoring apparatuses for wirelessly transmitting data indicating the condition of tires, such as air pressure, to a receiver.

A wireless tire condition monitoring apparatus has been proposed to enable a driver in a passenger compartment to monitor the condition of the tires of a vehicle, each one of which is attached to a wheel. The apparatus includes transmitters, each one of which is associated with a different one of the tires and is attached to the wheel of the associated tire. The transmitters wirelessly transmit data indicating the condition of the associated tires, such as air pressure and the temperature of the tire interior, to a receiver installed in a vehicle.

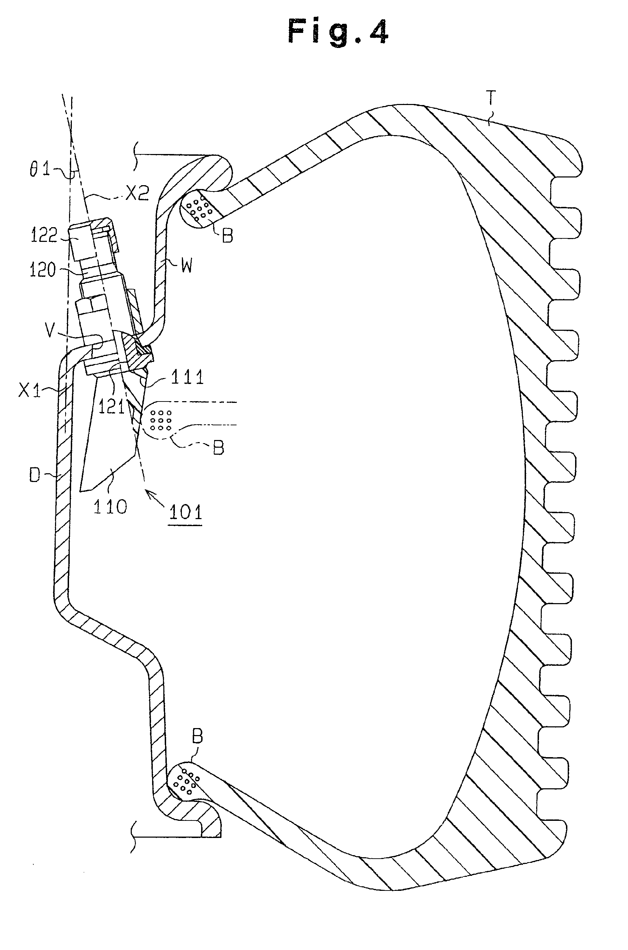

With reference to Fig. 4, a prior art transmitter 101 is attached to a wheel W to which a tire T is attached. The transmitter 101 includes a resin casing 110, which is located in the tire T, and a metal valve stem 120. The valve stem 120 is formed integrally with the casing 110. The valve stem 120 is fitted to a valve attachment hole V, which is formed in the wheel W. The casing 110 accommodates an electronic board on which various electronic units (not shown), such as a pressure sensor, a temperature sensor, a signal processing unit, and a battery, are mounted. The valve stem 120 projects from the casing 110 to the exterior through the wheel W. The valve stem 120 functions as an antenna that transmits data indicating the condition of the tire T.

An air inlet 121 is formed in the valve stem 120. A communication hole 111, which is connected to the air inlet 121, is formed in the casing 110. A valve cap 122 is detachably attached to the distal end of the valve stem 120. A valve core (not shown) is fitted to the air inlet 121 of the valve stem 120. The air inlet 121 of the valve stem 120 and the communication hole 111 of the casing 110 introduce air to the interior of the tire T.

When the vehicle moves, the transmitter 101, which is attached to the wheel W, rotates integrally with the tire T and the wheel W. In this state, centrifugal force acts on the transmitter 101 in accordance with the traveling speed of the vehicle. Thus, the casing 110 of the transmitter 101 is deformed with respect to the axis of the valve attachment hole V of the wheel W to be further spaced from the wheel W. This causes reactive force to act on the electronic board, which is accommodated in the casing 110. Accordingly, a failure including electric disconnection may occur in the electronic board.

When the tire T is attached to or detached from the wheel W, a bead portion B of the tire T moves along the casing 110 of the transmitter 101 while contacting the casing 110, as indicated by the double dotted broken line in Fig. 4. In this state, the bead portion B of the tire T urges the casing 110 toward the wheel W. Particularly, if the angle θ1, which is formed between the line X1 parallel with the rotational axis of the wheel W and the axis X2 of the valve attachment hole V, is relatively large, the casing 110 is spaced from a drop center portion D of the wheel W at a relatively large interval. That is, the larger the angle θ1 becomes, the more difficult it becomes to smoothly move the bead portion B along the casing 110. Further, the larger the angle θ1 becomes, the greater the force applied to the casing 110 by the bead portion B becomes. It is thus more likely that the pressing force of the bead portion B causes an electric failure.

If the angle θ1 is relatively small, the casing 110 is held in contact with the drop center portion D. In this case, the force applied to the casing 110 by the bead portion B during attachment or detachment of the tire T with respect to the wheel W becomes relatively small, as compared to the case in which the casing 110 is spaced from the drop center portion D. However, the casing 110 is constantly pressed against the drop center portion D by the force that acts against elasticity of the casing 110. That is, the smaller the angle θ1 becomes, the greater the force that presses the casing 110 against the drop center portion D becomes. It is thus more likely that the pressing force causes an electric failure.

As described, in the transmitter 101 of Fig. 4, in which the casing 110 is formed integrally with the valve stem 120, it is likely that the casing 110 is damaged, or electric disconnection occurs in the electronic board accommodated in the casing 110, or the attachment or detachment of the tire T with respect to the wheel W becomes difficult.

### SUMMARY OF THE INVENTION

Accordingly, it is an objective of the present invention to provide a transmitter of a tire condition monitoring apparatus that prevents a failure from being caused by the force applied to a casing.

To achieve the foregoing and other objectives and in accordance with the purpose of the present invention, the invention provides a transmitter of a tire condition monitoring apparatus for transmitting data indicating the condition of a tire of a vehicle. The transmitter includes a casing and a valve stem. The casing is located in the tire and accommodates an electronic unit for measuring a parameter representing the condition of the tire. The valve stem is formed independently from the casing. The valve stem is attached to a wheel to which the tire is attached. An elastic connecting member connects the casing to the valve stem.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objectives and advantages thereof, may best be understood by reference to the following description of the presently preferred embodiments together with the accompanying drawings in which:
Fig. 1 is a view schematically showing a vehicle in which a tire condition monitoring apparatus according to an embodiment of the present invention is installed;
Fig. 2 is a view explaining the structure of a transmitter installed in the apparatus of Fig. 1;
Fig. 3 is a cross-sectional view showing a tire attached to a wheel to which the transmitter of Fig. 2 is attached; and
Fig. 4 is a cross-sectional view showing a tire attached to a wheel to which a prior art transmitter is attached.

### DETAILED DESCRIPTION OF THE PREFERED EMBODIMENTS

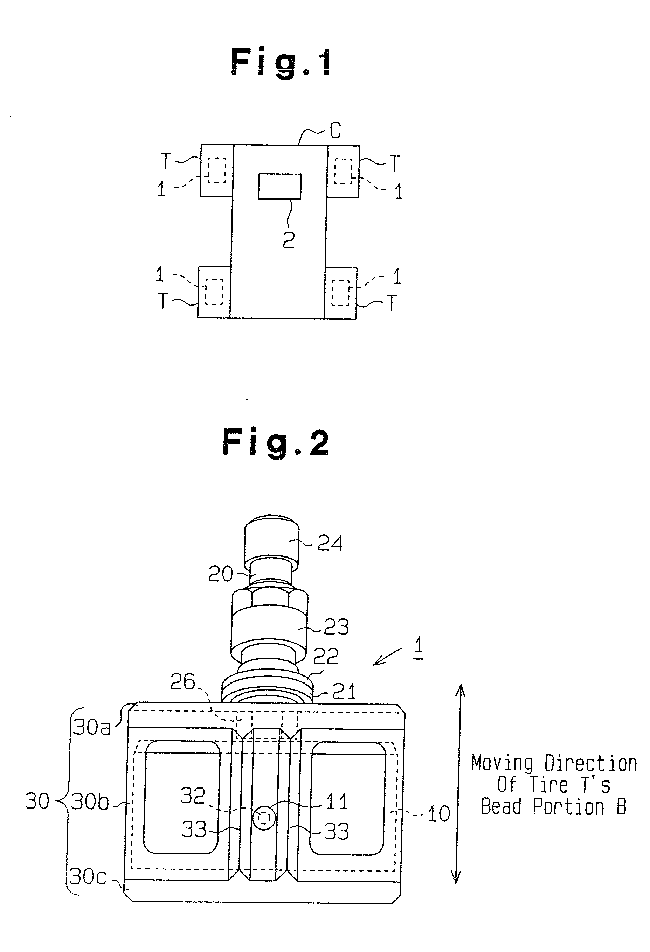

A transmitter 1 of a tire condition monitoring apparatus according to an embodiment of the present invention will now be described with reference to Figs. 1 to 3.

With reference to Fig. 1, the tire condition monitoring apparatus has four transmitters 1 and a receiver 2. Each one of the transmitters 1 is installed in a different one of four tires T of a vehicle C. The receiver 2 is installed in the body frame of the vehicle C. Each transmitter 1 measures a parameter indicating the condition of the associated tire T, such as the air pressure of the tire T and the temperature of the interior of the tire T. The transmitters 1 then wirelessly transmit data indicating the measurement to the receiver 2. Based on the data received from the transmitters 1, the receiver 2 enables an indicator (not illustrated), which is installed in the passenger compartment, to indicate the information regarding the air pressure and the temperature of the tires T.

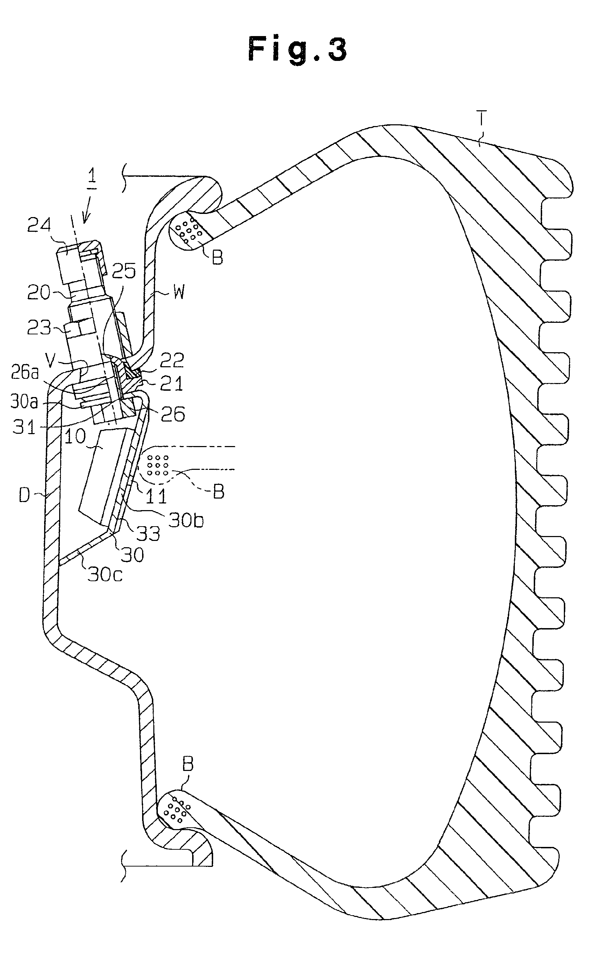

With reference to Fig. 3, each tire T is attached to a wheel W. Each transmitter 1 includes a casing 10, a valve stem 20, and a leaf spring 30. The casing 10 of each transmitter 1 is located in the associated tire T. The valve stem 20, which is formed independently from the casing 10, is fitted to a valve attachment hole V of the wheel W. The leaf spring 30 functions as a connecting member that elastically connects the casing 10 to the valve stem 20.

The casing 10 is a molded body of thermoplastic resin. Although not illustrated, the casing 10 accommodates an electronic board on which various electronic units, such as a pressure sensor, a temperature sensor, a signal processing unit, and a battery, are mounted. The valve stem 20 is formed of conductive material, or, preferably, metal material. The valve stem 20 projects from the casing 10 to the exterior through the wheel W. The valve stem 20 functions as an antenna that transmits data. The leaf spring 30 is formed of spring steel (SUP), stainless steel (SUS), or the like. The leaf spring 30 is bent in a certain shape, such that the leaf spring 30 tolerates various external forces, such as the centrifugal force caused by movement of the vehicle C, the force applied to the casing 10 during attachment or detachment of the tire T with respect to the wheel W, and the force applied to the casing 10 depending on the installation state of the transmitter 1.

A flange 21 is formed at the proximal end of the valve stem 20. A rubber grommet 22 is located between the flange 21 and the wheel W such that the grommet 22 is held closely in contact with the flange 21. A valve nut 23 is removably fitted to an axial intermediate portion of the valve stem 20. A valve cap 24, which is formed of resin or metal, is removably fitted to the distal end of the valve stem 20. With the valve cap 24 and the valve nut 23 removed from the valve stem 20, the valve stem 20 is passed through the valve attachment hole V of the wheel W from an inner side of the wheel W. The valve nut 23 is then fitted to the valve stem 20 from an outer side of the wheel W. This secures the valve stem 20 to the valve attachment hole V of the wheel W.

An air inlet 25 axially extends through the valve stem 20. Although not illustrated, a valve core is fitted to the air inlet 25. A hollow bolt 26 with a through hole 26a is removably fitted to the end of the valve stem 20 that faces the interior of the tire T. The air inlet 25 and the through hole 26a of the hollow bolt 26 introduce air to the interior of the tire T.

In addition to introduction of the air to the interior of the tire T, the hollow bolt 26 secures the leaf spring 30 to the valve stem 20. More specifically, the leaf spring 30 includes a proximal portion 30a that has a through hole 31. The hollow bolt 26 is passed through the through hole 31 and then fitted to the valve stem 20, such that the leaf spring 30 is secured to the valve stem 20.

An intermediate portion 30b of the leaf spring 30 is bent to form an acute angle with respect to the proximal portion 30a. With reference to Fig. 2, a through hole 32 is formed in the substantial middle of the intermediate portion 30b. The casing 10 includes a projection 11, which is formed in the substantial middle of the casing 10. The projection 11 is passed through the through hole 32, which serves as an engaging hole with which the projection 11 is engages. Then, for example, the projection 11 is thermally deformed to a rivet-like shape. This fixes the casing 10 to the leaf spring 30. A pair of projections 33 project from the intermediate portion 30b at positions corresponding to opposite sides of the projection 11 of the casing 10. The projections 33 project in a direction in which the bead portion B of the tire T moves when the tire T is attached to or detached from the wheel W. With reference to Fig. 3, each of the projections 33 projects with respect to the deformed distal end of the projection 11 of the casing 10, as preferred in the present invention.

A distal portion 30c of the leaf spring 30 is bent to form an obtuse angle with respect to the intermediate portion 30b. The leaf spring 30 elastically presses the distal end of the distal portion 30c against the drop center portion D of the wheel W. The casing 10 is located between the leaf spring 30 and the drop center portion D such that the casing 10 is held in a non-contact state with the drop center portion D.

The illustrated embodiment has the following advantages.
(1) In each transmitter 1, the leaf spring 30 elastically connects the casing 10 to the valve stem 20. Thus, when the vehicle C moves and each transmitter 1 rotates integrally with the tire T and the wheel W, the elasticity of the leaf spring 30 absorbs centrifugal force, which acts on the casing 10 in accordance with the traveling speed of the vehicle C. This suppresses the reactive force generated in the electronic board, which is accommodated in the casing 10. More specifically, the casing 10 is prevented from being damaged by the centrifugal force generated by the movement of the vehicle C. Further, electric disconnection is stopped from occurring in the electronic board, which is accommodated in the casing 10.
(2) When each tire T is attached to or detached from the associated wheel W, the bead portion B of the tire T moves along the transmitter 1 while contacting the transmitter 1, as indicated by the double-dotted broken line in Fig. 3. In this state, the leaf spring 30 is located between the bead portion B of the tire T and the casing 10 to prevent the bead portion B from contacting the casing 10. That is, the elasticity of the leaf spring 30 absorbs the pressing force otherwise applied to the casing 10 by the bead portion B. Accordingly, the casing 10 is prevented from being damaged by the pressing force of the bead portion B. Further, electric disconnection is stopped from occurring in the electronic board, which is accommodated in the casing 10.
(3) Since the distal portion 30c of the leaf spring 30 is pressed against the drop center portion D of the wheel W, the transmitter 1 is located maximally close to the wheel W. This allows the bead portion B of the tire T to smoothly move along the transmitter 1 as contacting the transmitter 1 during attachment or detachment of the tire T with respect to the wheel W. That is, the tire T is smoothly attached to or detached from the wheel W. This also minimizes the pressing force applied to the transmitter 1 by the bead portion B. Accordingly, the casing 10 is prevented from being damaged by the pressing force of the bead portion B. Further, electric disconnection is prevented from occurring in the electronic board, which is accommodated in the casing 10.
(4) The proximal portion 30a of the leaf spring 30 is secured to the valve stem 20. The distal portion 30c of the leaf spring 30 is pressed against the drop center portion D of the wheel W. In other words, both ends of the leaf spring 30 are fixed. Even if the centrifugal force caused by the movement of the vehicle C acts on the transmitter 1, the elasticity of the leaf spring 30 maintains the distal portion 30c as pressed against the drop center portion D. This prevents the leaf spring 30 and the casing 10 from being oscillated by the centrifugal force. The tire T and the wheel W thus rotate stably in an equilibrated manner.
(5) The casing 10 is located between the leaf spring 30 and the drop center portion D such that the casing 10 does not contact the drop center portion D. This prevents the casing 10 from being pressed against the wheel W. Accordingly, the casing 10 is prevented from being damaged, and electric disconnection is prevented from occurring in the electronic board, which is accommodated in the casing 10.
(6) The casing 10 is secured to the leaf spring 30 by passing the projection 11 of the casing 10 through the through hole 32 of the leaf spring 30, followed by deformation of the distal end of the projection 11 to the rivet-like shape. In other words, the securing of the casing 10 to the leaf spring 30 is accomplished without using an adhesive agent or a spring. This reduces the weight of the transmitter 1. Further, if the adhesive agent is used to secure the casing 10 to the leaf spring 30, external force, such as centrifugal force, may act to hamper the adhesion between the casing 10 and the leaf spring 30. This separates the casing 10 from the leaf spring 30. Alternatively, if the spring is used to secure the casing 10 to the leaf spring 30, the external force may act to loosen the spring, thus separating the casing 10 from the leaf spring 30. In contrast, the illustrated embodiment reliably prevents the casing 10 from being separated from the leaf spring 30.
(7) While the distal portion 30c of the leaf spring 30 is held in contact with the drop center portion D of the wheel W, the casing 10 is secured to the leaf spring 30 by the single projection 11. Thus, if pressing force is applied to the leaf spring 30 by the beat portion B, the leaf spring 30 is slightly bent with respect to the projection 11. This forms a narrow gap between the casing 10 and the leaf spring 30, except for the portion of the leaf spring 30 that contacts the projection 11. In other words, the pressing force transmitted from the leaf spring 30 to the casing 10 hardly affects the remainder of the casing 10, or the portions of the casing 10 other than the projection 11. Thus, if the pressing force of the bead portion B bends the leaf spring 30, the casing 10 remains unaffected. This prevents the casing 10 from being damaged, while stopping electric disconnection from occurring in the electronic board, which is accommodated in the casing 10.
(8) The two projections 33 project from the leaf spring 30 in the moving direction of the bead portion B of the tire T. Each of the projections 33 projects with respect to the distal end of the projection 11. Thus, when the tire T is attached to or detached from the wheel W, the projection 11 is protected from the bead portion B of the tire T. Further, the strength of the leaf spring 30 is increased. In addition, the bead portion B of the tire T moves along the projections 33 of the leaf spring 30 during attachment or detachment of the tire T with respect to the wheel W. This reduces the contact area of the leaf spring 30 with the bead portion B of the tire T. The tire T is thus smoothly attached to or detached from the wheel W.
(9) When the tire T is attached to or detached from the wheel W, the distal portion 30c of the leaf spring 30 protects the casing 10 from the bead portion B of the tire T. The distal portion 30c of the leaf spring 30 is bent to form an obtuse angle with the intermediate portion 30b, to which the casing 10 is secured. Accordingly, in the illustrated embodiment, the tire T is smoothly attached to or detached from the wheel W, as compared to, for example, the case in which the distal portion 30c forms a right or acute angle with the intermediate portion 30b.

It should be apparent to those skilled in the art that the present invention may be embodied in many other specific forms without departing from the spirit or scope of the invention. Particularly, it should be understood that the invention may be embodied in the following forms.

Two or more projections 11 may project from the casing 10. In this case, a corresponding number of through holes 32 need be formed in the intermediate portion 30b of the leaf spring 30. For example, while one projection 11 projects from the middle of the casing 10, four projections 11 may project from each of the four corners of the casing 10. That is, the casing 10 includes five projections 11. In this case, five through holes 32 need be formed in the intermediate portion 30b of the leaf spring 30 at positions corresponding to the five projections 11. The casing 10 is secured to the leaf spring 30 by passing each of the projections 11 through the corresponding one of the through holes 32, followed by, for example, thermal deformation of the distal end of each projection 11 to a rivet-like shape. Further, it is preferred that the projections 33 project from the leaf spring 30 to protect the projections 11. In this structure, the force that acts on the transmitter 1 is transmitted from the leaf spring 30 to the casing 10 by the projections 11. In other words, the greater the number of the projections 11, or the through holes 32, is, the more dispersed the force transmitted to the transmitter 1 becomes. This decreases the force that acts on each projection 11, thus improving the anti-force tolerance of the casing 10.

The present examples and embodiments are to be considered as illustrative and not restrictive and the invention is not to be limited to the details given herein, but may be modified within the scope and equivalence of the appended claims.

## Claims

1. A transmitter of a tire condition monitoring apparatus for transmitting data indicating the condition of a tire (T) of a vehicle, including:
a casing (10), which is located in the tire (T), wherein the casing (10) accommodates an electronic unit for measuring a parameter representing the condition of the tire (T); and
a valve stem (20), which is formed independently from the casing (10), wherein the valve stem (20) is attached to a wheel (W) to which the tire (T) is attached;
wherein the transmitter is **characterized by** an elastic connecting member (30) that connects the casing (10) to the valve stem (20).

2. The transmitter according to claim 1, **characterized in that** the casing (10) is attached to the connecting member (30) such that the casing (10) is located between the wheel (W) and the connecting member (30).

3. The transmitter according to claims 1 or 2, **characterized in that** the connecting member (30) includes a proximal portion (30a) secured to the valve stem (20) and a distal portion (30c) pressed against the wheel (W).

4. The transmitter according to claim 3, **characterized in that**:
the connecting member (30) includes an intermediate portion (30b) located between the proximal portion (30a) and the distal portion (30c);
the casing (10) is attached to the intermediate portion (30b); and
the distal portion (30c) forms an obtuse angle with respect to the intermediate portion (30b).

5. The transmitter according to any one of claims 1 to 4, **characterized in that**:
the casing (10) is formed of thermoplastic resin and includes a projection (11);
the connecting member (30) includes an engaging hole (32) with which the projection (11) is engaged; and
the projection (11) is passed through the engaging hole (32) and then deformed to a rivet-like shape.

6. The transmitter according to claim 5, **characterized in that**:
the connecting member (30) includes a projection (33) that projects from a side of the connecting member opposite to a side to which the casing (10) is attached; and
the projection (33) projects with respect to a distal end of the projection (11).

7. The transmitter according to any one of claims 1 to 6, **characterized in that** the connecting member (30) includes a projection (33) that projects from a side of the connecting member opposite to a side to which the casing (10) is attached.

8. The transmitter according to claim 7, **characterized in that** the projection (33) projects in a direction in which a bead portion of the tire (T) moves when the tire (T) is attached to or detached from the wheel (W).

9. The transmitter according to any one of claims 1 to 8, **characterized in that** the connecting member (30) is a leaf spring.
